# EUROPEAN PATENT SPECIFICATION

(11) **EP 1 410 534 B1**
(45) Date of publication and mention of the grant of the patent: **31.05.2006**
(21) Application number: 02743402.6
(22) Date of filing: 28.06.2002
(51) Int. Cl.: H04B 10/10

(54) **SYSTEM AND METHOD FOR MASS BROADBAND COMMUNICATIONS**
VERFAHREN UND VORRICHTUNG ZUR MÄSSIGEN BREITBANDIGEN KOMMUNIKATIONEN
SYSTEME ET PROCEDE DE COMMUNICATION DE MASSE A LARGE BANDE

(30) Priority: 13.07.2001 GB 0117177
(43) Date of publication of application: 21.04.2004
(73) Proprietor: Redwave Technology Limited, Cheltenham, Gloucestershire GL52 2EX (GB)
(72) Inventor: HUGHES, Philip, Thomas, c/o Innovium Research Ltd., Noss Mayo, Plymouth PL8 1HB (GB)
(74) Representative: Addison, Ann Bridget
(86) International application number: PCT/GB2002/003032
(87) International publication number: WO 2003/007510

(56) References cited:
- WO-A-99/67903
- US-A- 5 566 022

## Description

### Background to the Invention

The present invention relates to a system and method for high-density subscriber communications.

For many years, the problem of providing large numbers of residential and small business subscribers with simultaneous high speed telecommunications services in an economic manner has been difficult to solve. For communications between subscribers which are of low bandwidth (for example, less than about 56,000 bits per second (bps)), the existing telephone system is entirely adequate. However, when bandwidths of several orders of magnitude higher are required between subscribers (for example in streaming high-quality video - 2-6Mbs), traditional equipment and methods are no longer adequate.

Various technologies have been developed therefore to try to deliver these sorts of bandwidths to subscribers in a way that allows the owner and/or operator of the required equipment to deploy it and to subsequently charge for its use at a net profit potentially over a period of several years. Clearly, the shorter the time to profit the better for the owner/operator.

These technologies fall into two categories: wired and wireless. Wired systems rely on conducting cables being deployed (either underground or overground) to each subscriber's premises. The cables may conduct either electrical or optical signals. However, in either case the cost of this is very high for high bandwidth systems.

The other category of system: wireless - makes use of free-space electromagnetic radiation to carry signals between subscribers. Wireless systems themselves break down into radio frequency systems - those that use electromagnetic waves of frequency less than {10¹² Hz} - and which have been well-known for almost a century and optical systems which arguably have an even longer pedigree. More recently, however, systems that use infrared radiation (between 800 nm to 50,000 nm in wavelength) have become popular because of improvements in the generation and detection technologies of radiation of these wavelengths. In principle, even shorter wavelength radiation and beyond could be used: the practical difficulties with the detection and emission technologies prevent this at present.

The advantage of wireless systems is that, in principle, the equipment is easier and cheaper to deploy than wired - no excavation or cable-carrying structures are required. There is much prior art in both the RF and optical areas that is aimed at solving this "last mile" problem.

In wireless communications systems, the key areas which affect their performance and economics are:-
1. How much frequency spectrum is used in providing the services to a subscriber population: "Spectrum Efficiency".
2. How easy it is to arrange for subscribers to transmit and receive radiation effectively - so called "coverage".
3. The complexity and therefore manufacturing costs of the equipment to be deployed; especially subscriber premises equipment.

In terms of the amount of frequency spectrum required per subscriber, this is an issue both for RF and optical systems. Because the signalling medium is a radiated wave, if sufficient sources of radiation are present at substantially the same time, it becomes difficult to disentangle which signal came from and was intended for which subscriber. This means that, at a particular subscriber density, this so-called interference will dominate and the communications system will become unusable. The more effectively a communications system uses its spectrum, the higher will be this cut-off density. For mass-market usage therefore, a wireless system must have very good spectral efficiency to sustain the subscriber densities encountered in most residential areas.

There are several well-known technical ways of increasing the spectral efficiency of a wireless system; these include frequency, time, code and space division multiplexing. Frequency, time and code systems operate by encoding the signals to be transmitted in differing ways to pack these resources with as many signals as possible without adverse interference taking place. Each of these systems increases the complexity and hence cost of the necessary equipment, but with the pay back of allowing higher subscriber densities to be reached. Of these methods, time-division multiplexing is probably the most straightforward and easiest to implement in a practical system (especially optical systems).

Space division multiplexing essentially makes use of the geometrical properties of the transmitted radiation, such as collimation angle and effective range, to mitigate interference by restricting the spatial spread of radiation. This means that sets of devices, either out of range of each other, or within specific angular ranges of each other can re-use a given frequency without interference in principle. These two types of space-division multiplexing are demonstrated by a modem multi-sectored GSM base-station cell.

Again, with space division multiplexing, transmitters and receivers need to be carefully designed to take full advantage of the range and angular degrees of freedom. Indeed, some RF, and most optical, systems make use of highly collimated radiation beams so that the angular spread of these beams is very low; and hence the spectrum re-use can be very high.

A key problem with these so called "point to point" and "mesh" systems is that sophisticated means of aligning and re-aligning the transmitters and receivers of the beams become necessary - again increasing unit cost and installation complexity and time. This is because subscribers' geographic locations do not lie in regular geometric patterns and the equipment deployed at these locations has to be able to cope with this.

Another problem associated with free-space radiation is that, as the frequencies used increase it becomes more difficult to arrange for the reliable reception of the radiation. For example, in long-wave (1,500m) radio transmissions (LW RF), these waves readily penetrate solid (non-metallic) structures (both man-made and natural, for example, vegetation, hills, mountains etc.) and can be received very easily by simple equipment. However, the amount of information that can be transferred using this frequency of radiation is quite limited. In the above example, a theoretical maximum of only 400 kbit/s is possible. This is entirely inadequate for mass broadband communications, which require many hundreds or thousands of megabits per second to be transmitted.

In practice, this means that frequencies in excess of several GHz must be used. However, the problem then is that radiation of these frequencies penetrates solid objects far less readily than LW RF. In fact, at these frequencies, the radiation behaves essentially as visible light. Thus, in order for information to be transferred, the receiver must be within line-of-sight of the transmitter. In principle, this is not a problem. In practice, broadband access wireless communications systems are generally intended to be deployed in highly populated areas, which means that buildings obscure lines of sight. The design and deployment of these systems therefore involves much time and effort in arranging for line of sight, or near line of sight positioning of the subscriber and system equipment, since subscriber units must be placed in prominent positions, above roof lines, on the sides of tall buildings etc. In turn, this increases installation problems and the complexity of the systems and, in some territories, causes problems related to planning consent - where regulations do not permit the mounting or display of objects above certain dimensions, or not conforming to certain aesthetics.

This issue of the inter-visibility of communication system units is generally referred to as "coverage", a term originating in cellular, or point-to-multipoint, radio systems in which the subscriber units (fixed or mobile) are divided into geographic areas (or "cells") each serviced by a multi-channel transceiver "base-station". Such base-stations have to be deployed such that there is a high probability that any subscriber within range can communicate with the base-station. If this is so, the subscriber unit is described as "covered" by the base-station.

In this document, the term "covered" or "coverage" is used to mean the possibility of a subscriber communicating with the rest of the system - this does not necessarily imply a cellular or point-to-multipoint system.

### Specific Prior Art Systems and Technologies

WO 99/67903 disdoses a communication network comprising several areas, wherein each area comprises a so-called curb and there is a local network per curb. Subscribers in these local networks communicate with the curb by means of wireless optical signals.

US-5566022 relates to an indoor wireless communication system comprising omnidirectional transmitters and receivers and a plurality of relays for transmitting and receiving infrared signals through free air.

### EP-1085707 - Radiant Networks: "Mesh radio " system

EP-1085707 describes a communications system which has a plurality of nodes, each node having a wireless transmitter and receiver for wireless transmission and reception of signals. Each node also has means for determining if a signal received by said node includes information for another node and for causing a signal including said information to be transmitted by said transmitting means to another node if said signal includes information for another node. Each node has a substantially uni-directional point-to-point wireless link to one other node only. Thus, this patent discloses a network system that is built from many collimated radio links between pairs of radio transceiver devices ("nodes") located on subscriber premises. In any configuration of the network, each radio link is specific to one particular transmitter node and one particular receiver node. Each node mayhave more than one such link to a set of other nodes. The network system disclosed is a multi-hop or "mesh" architecture, in which each node may carry traffic for other nodes as well as sourcing and sinking traffic itself. The nodes do this by examining the signals sent on each link to find routing information embedded in the signals, and then acting on this information.

The spectral efficiency of this invention is good, but limited by the fact that its space-division multiplexing is based on angular (azimuthal) sectors. This means that spectral efficiency is obtained by the use of high-gain antennas. To increase spectral efficiency means increasing antenna gain and hence aperture. Spectral efficiency in this system is therefore bought at the expense of large nodes that increases their installation difficulty. In addition, this system requires a complex decoding process of the received signals, in each node, to establish the routing of information across the network. This again adds to node cost and complexity, and hence network economics and ease of installation.

### WO99/45665 Airfiber: Hybrid Picocell Communications System.

WO99/4566 describes a free-space laser communications system that is comprised of a large number of picocells. Each picocell comprises a single base-station providing conventional (RF) communication with one or more (usually many) users. Each base-station also comprises at least two laser transceivers that are mechanically pointed in space by means of an automatic alignment mechanism. These optical transceivers allow a point-to-point mesh of base-stations to be constructed that forms an intermediate back-haul network for the end-user traffic. In this invention, access to the end user is effected by prior art means: an RF cellular transceiver system. The novel backhaul mechanism makes use of highly collimated optical beams as fixed communication links. Again, the absolute need to align accurately the backhaul links increases the complexity and size of the base-station equipment. Because the picocell range is of the order of 100m, this means that in order to service 1 square kilometre, approximately 30-35 such base-stations would required (assuming a uniform deployment density). The economics of such numbers of complex installations would tend to mitigate against mass market rollout.

### Nokia "Roof-top" Radio System

This system is described in various public-domain documents, for example "Nokia Rooftop Wireless Routing" a white paper available on Nokia's public website: www.nokia.com, in addition to other disclosures on that website.

Nokia discloses a system of roof-top mounted wireless routers, which is claimed to allow various types of telecommunications operator to deliver broadband access to a larger customer base than could be reached using purely wired means. Using these omni-directional wireless routers a packet-based (IP) multihop (mesh) network can be created. These routers operate in license-exempt RF bands (e.g. 2.4 GHz, and 5.8 GHz) that have limited spectrum available for user traffic. Information traverses several hops (typically 3-4) before reaching another type of unit ("airhead") which acts as a data concentrating interface to a wired conventional network point of presence (POP). The limited available spectrum together with the unrestricted broadcast nature of the system wireless links imply that the deployment density of the equipment is restricted. This is mitigated to some extent by the system's intrinsic support for packet-based (IP) communications protocols that are not time sensitive. However, the provision of strictly time sensitive services, such E1/T1, would severely limit the capacity of this system.

### US-5,724,168 - Wireless Diffuse Infrared LAN System

US-5724168 discloses a wireless diffuse infrared local area network communication system which operates in enclosed (indoor) areas. The communication system includes a controller and a central substantially omni-directional infrared transceiver disposed on the inside walls of the enclosed area operatively connected with the controller. The system further includes a remote station and means, operatively coupled to the remote station, for transceiving a communicated signal with the omni-directional infrared transceiver.

The remote units communicate only with the central transceiver either by a single-frequency direct line of sight or by means of reflections from the walls of the enclosure. Hence the units are immersed in a substantially isotropic radiation bath. The role of enclosure walls in this invention appears to be to provide reflecting surfaces so that the remote (mobile) units need not be pointed towards the central transceiver. A special time-division multiple access (TDMA) communications protocol between the central and remote stations is also disclosed which allows a remote station and the central station to communicate in the shared medium of the isotropic infrared medium.

This indoor system is obviously unsuitable for an outdoor public broadband communications network because of its reliance on diffuse reflection of signals from various surfaces, which, on an outdoor scale, is impracticable because of the attenuation this introduces in signal and the "noise" it generates in terms reflected signals from other units.

### Requirements for Broadband Wireless Access Systems

The above examples demonstrate the inadequacy of such prior art systems for supporting a practical mass communications network.

Advantageously, the following features would be available for such a technology:-
1. The available spectrum is optimally used and re-used for high deployment densities (i.e. well in excess of 1,000 subscribers per square kilometre).
2. The system should be capable of delivering broadband (i.e. multi-megabit/s services) to a substantial number of subscribers simultaneously.
3. The system should be economical to deploy at both low densities and much higher densities (as above).
4. It should be straightforward to arrange, in principle, 100% coverage of a subscriber population.
5. The system should be sufficiently reliable such that competitive service availabilities are achieved.
6. The system should support existing services satisfactorily and have significant scope for supporting new, unforeseen services.
7. The subscriber equipment should be as simple, and therefore as low cost, as possible. Complex schemes, such as code-division multiplexing, should therefore be avoided if possible.
8. The subscriber unit should be as small and light as possible, and contain no moving parts (for example for pointing lasers and antennas) - which tend adversely to affect the reliability of the unit. In addition, field plant should have as long an installed and in-service lifetime as possible.
9. The subscriber equipment should be easy to install and operate very reliably, with minimal equipment and skill. (Indeed, ideally, subscribers should be able to install their own equipment.)
10. The system should allow significant flexibility in operations and inter-work satisfactorily with existing installed plant.

### SUMMARY OF THE INVENTION

The present invention relates to a mass communications network system -according to claim 1- and a method for providing broadband mass communications-according to claim 12- and is based on modified free-space optical transmission of signals.

The system comprises at least one, and preferably many, "patches". Each patch comprises a geographical grouping of network subscribers, each having a subscriber unit (SU) installed on their premises or nearby, and various objects in the environment, such as buildings, in the vicinity.

A significant aspect of the invention is the use of objects in the environment, such as buildings, in and around the patch to modify the way signals are propagated within the patch between SUs.

Physical objects disposed in space have certain properties with respect to the propagation of electromagnetic radiation in the intervening spaces.

The pattern of propagation in these intervening spaces will depend mainly on the following features:
1. The size and frequency/wavelength of the radiation both in absolute terms and in relation to the objects' sizes;
2. The shape of the objects;
3. The arrangement of the objects with respect to one another; and
4. The surface finish of the objects - i.e. whether they are absorbing, transmissive, reflective, or combinations of all three.

In thinking of this arrangement of objects, arrangements in which any intervening space is completely enclosed by the objects, (i.e. such as inside a building), are excluded.

For the sort of environment found in outdoor built-up public spaces - in cities, towns or villages etc. - the above features may be confined to:
1. Radiation of short wavelength - practically from about 10GHz and higher, including, but not limited to the infrared region of the spectrum.
2. Objects of the size of buildings - of the order of tens of metres in dimension and separated by tens of metres.
3. Such objects are essentially polygonal having at least one almost vertical edge, practically normal buildings - houses, offices, works, etc. laid out in street, block, campus arrangements. These general arrangements of objects (including fences and trees) are referred to as "Object Zones".
4. These objects are generally absorbing, with a small amount of reflectivity.

At frequencies (as indicated above) where radiation propagates in "line of sight mode", certain configurations of notional omni-directional radiation sources distributed around a given Object Zone (OZ) will give rise to one or preferably more spatial "Free Propagation Zones" (FPZ) containing a sub-set of the total number of notional radiation sources. In a FPZ, the radiation from each contained notional source falls on all the other sources in the FPZ and no others (outside the FPZ).

There are very many *potential* FPZ configuration possibilities for a given OZ. However, the number of *realisable* FPZ configurations for a given OZ will depend on the number and arrangement of notional sources permitted to populate the OZ. In most practical cases, there are a large number of realisable FPZ for an OZ and its sources.

The utility of a FPZ in practical terms is defined by the following factors/considerations:
1. There is no interference between the radiation of two different FPZs. This means that the spectral bandwidth employed in these FPZ can be the same.
2. FPZs can be spatially separated by very small differences (e.g. the thickness of a wall, or building) compared to the extent of the OZ. Thus, FPZs can be very densely packed.
3. The FPZ forms the basis of a useful method of organising a communications network.

From a communications network point of view, it is desirable that the realisable FPZ configuration have the following features:
1. Given approximately one notional source per object, and no object having more than (say) 10 sources associated with it, there should be as many FPZ created as possible.
2. The FPZs should be realised with sources in reasonably accessible positions on the objects (e.g. below roof height), but which are not obstructed by moving objects, e.g. people, vehicles etc.

It is not obvious in most practical cases, given a particular OZ, how many and what the arrangement of sources should be to generate the maximum number of practical FPZ - and hence, highest spectral efficiency. Thus, given the potential FPZ characteristics of an arbitrary OZ (which are independent of technology), this invention advantageously relates to:
1. Disclosing the FPZ/OZ and related concepts in a theoretical (or general) manner,
2. Showing the principles of how certain realisable FPZ or any OZ can be exploited to form the basis of an economic, high-performance, high-density wireless communications system,
3. Disclosing the basic elements of a method to optimise the FPZ configuration for any OZ, and
4. Disclosing the basic elements of the design of equipment and its installation to exploit these principles.

A realisable and equipped FPZ is referred to as a "Patch".

According to one aspect of the present invention, therefore, there is provided a broad band mass communications network system comprising:
a plurality of patches,
each patch including a plurality of subscribers,
and each subscriber having a respective subscriber unit for transmitting signals to and receiving signals from other subscribers, and
respective patches being inter-connected by way of patch interface points,
in which system:
   each subscriber unit comprises an indoor interface unit for user access to the system and an outdoor mounted communication unit for the transmission and reception of signals,
   the signals are impressed on a carrier signal operating at frequencies in the range from infra-red to ultra-violet,
   the subscriber units of a respective patch are arranged to transmit the carrier signals substantially omni-directionally and to communicate by way of direct line of sight connections within the patch,
   objects within and/or around the respective patch are employed to determine and/or modify the propagation pattern of the carrier signal and to define boundaries for the patch, and
   each patch interface point being connected to respective subscriber units from at least two adjacent patches by communication means other than that between respective subscriber units within the patches.

The invention thus exploits the shadowing properties of objects in the environment to divide space up into regions, called "patches", in which a wireless frequency channel can be re-used without interfering with the same channel in neighbouring patches. This has the advantage of achieving high spectral efficiency through space division multiplexing.

In a preferred embodiment described below, the SUs are connected to their subscriber's customer premises equipment and can pass information between each other by means of signals impressed on a carrier operating in the infrared (IR) region of the electromagnetic spectrum. Such frequencies are absorbed more and scattered less easily than radio frequencies, and this permits the formation of well defined patches boundaries.

The SUs are substantially omni-directional, and all the SUs in a particular patch are in direct line of sight of each other. This allows the maximum bandwidth to be packed into the available frequencies in a patch, and means that the SUs need not be aligned with precision. By the same token, SUs in different patches are not within line of sight to each other and cannot directly communicate.

The maximum linear dimension of a patch may be of the order of 200m. There is a large amount of prior-art that shows that atmospheric impairments of IR signal propagation over this sort of distance will not affect system availability.

This invisibility of SUs in different patches is due principally to physical obstructions in the natural and built environment in which the SUs are installed. Examples of physical obstructions are building walls, fences, trees, geographic features etc.

Because buildings and other objects in typical high-density subscriber environments effectively absorb high-frequency radiation such as IR, the invention can achieve very high spectral re-use (and hence high subscriber densities). This high re-use is not due principally to the equipment design - but rather the way in which the equipment is deployed as a system. Exploiting these shadowing effects also means that SUs need not be roof or chimney mounted, but can be mounted at much lower levels.

To obviate the need for actively re-pointing, or aligning transmitters and receivers, the SUs' signals are preferably emitted and received in a substantially omni-directional fashion. This feature significantly reduces the cost and complexity of the equipment, and greatly facilitates physical installation owing to the resulting equipment size and weight reduction.

Signals originating in a particular patch may be transported to anywhere else in the network by interconnecting patches by means of a Patch Interconnection unit (PIP). Patches, therefore, may transport not only signals originating and terminating internally to the patch, but also signals received from or to be transported to other patches.

The key benefits of small separately interconnected patches are:-
1. It can be shown that fewer system resources (timeslots) are required if small patches are used.
2. Correspondingly, the network throughput is greater, (and potential congestion less),
3. The IR spectrum re-use is greater - and hence the maximum deployment density.

The use of IR means that there is a large amount of bandwidth available for carrying signals, and hence the provision of multi-megabit services to many subscribers simultaneously is practical.

According to another aspect of the present invention, there is provided a method for providing broad band mass communications, comprising:
forming a plurality of patches, each including a plurality of subscribers,
providing each subscriber with a respective subscriber unit for transmitting signals to and receiving signals from other subscribers, each subscriber unit comprising an indoor interface unit for user access to the system and an outdoor mounted communication unit for the transmission and reception of signals,
locating the subscriber units of a respective patch so as to communicate by way of direct line of sight connections within the patch,
impressing the signals on a carrier signal operating at frequencies in the range from infra-red to ultra-violet,
transmitting the carrier signals substantially omni-directionally,
employing objects within and/or around the respective patch to determine and/or modify the propagation pattern of the carrier signal and to define boundaries for the patch, and
inter-connecting respective patches by way of patch interface points, each patch interface point being connected to respective subscriber units from at least two adjacent patches by communication means other than that between respective subscriber units within the patches.

The method of communication in and between patches in the present invention is designed to emulate closely that of a piece of electrical cable. Hence, the invention is transparent to end-user protocols.

Because of the relative simplicity of the equipment design, and the ease of installation, operating costs can be kept low, and hence the invention provides operators with an economic solution to network construction.

### BRIEF DESCRIPTION OF THE PREFERRED EMBODIMENT

The invention is described further, by way of example, with reference to the accompanying drawings, in which:-
Figure 1a illustrates a typical mounting of a subscriber unit (SU) according to the present invention;
Figure 1b illustrates, to scale, a typical mounting of a prior art wireless subscriber unit;
Figure 2 illustrates several SUs deployed in a typical built up area to form a patch;
Figure 3a shows a generic polygonal patch boundary consisting, in general, of opaque and transparent segments;
Figure 3b shows particular features of an SU designed to cope with less than ideal patch boundaries;
Figure 4 is a block diagram of one embodiment of SU;
Figure 5 illustrates the interconnection of patches by means of patch interface points (PIPs);
Figure 6a shows a region covered by a number of interconnecting patches;
Figure 6b shows the region of Figure 6a in terms of the deployed PIPs with lines between PIPs representing the multi-routing fabric of patches;
Figure 7 is a block diagram of one embodiment of PIP;
Figure 8 is a block diagram of one embodiment of a core network interface (CNI);
Figure 9 is a diagram showing the control and management aspects of the network according to the present invention;
Figure 10a is a table representing the activities of the units in the present invention at all times in a periodically repeating time sequence;
Figure 10b shows a fragment of the network of Figure 9, illustrating its activities in a time-sequence for two of the components of the fragment; and
Figure 11 is block diagram corresponding to Figure 4 but showing a modified embodiment of SU.

### DETAILED DESCRIPTION OF PREFERRED EMBODIMENTS

A preferred embodiment of the present invention will now be described by reference to the figures.

### THE PATCH

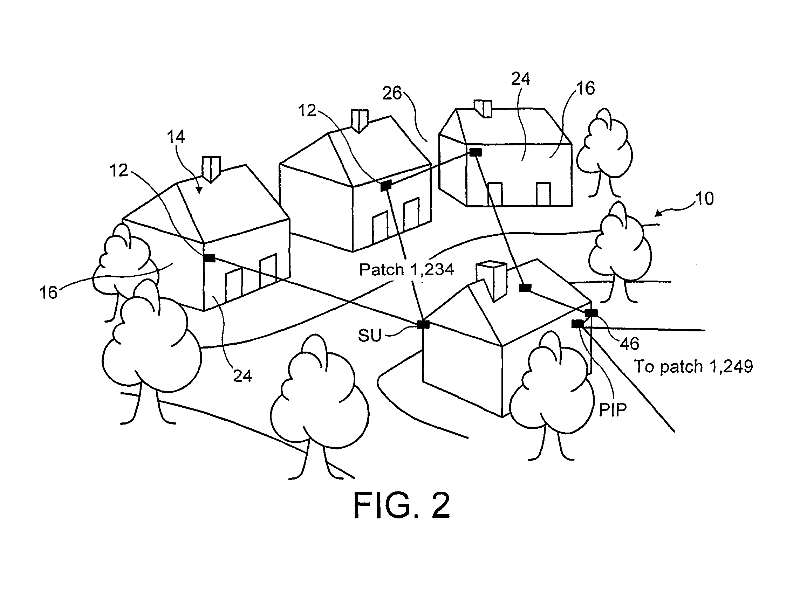

A principle component of the present invention is the patch 10, one embodiment of which is illustrated in Figure 2. A network system according to the invention comprises one or more such patches 10.

Each patch 10 comprises two or more subscriber units (SU) 12 and various physical obstructions 14 forming a conceptual boundary of the patch 10. The SUs 12 of a patch 10 are mounted for example on respective buildings 16 such that they are each in line of sight of each other and such that optically opaque parts of the patch boundary 14 shield them from SUs 12 in other patches 10.

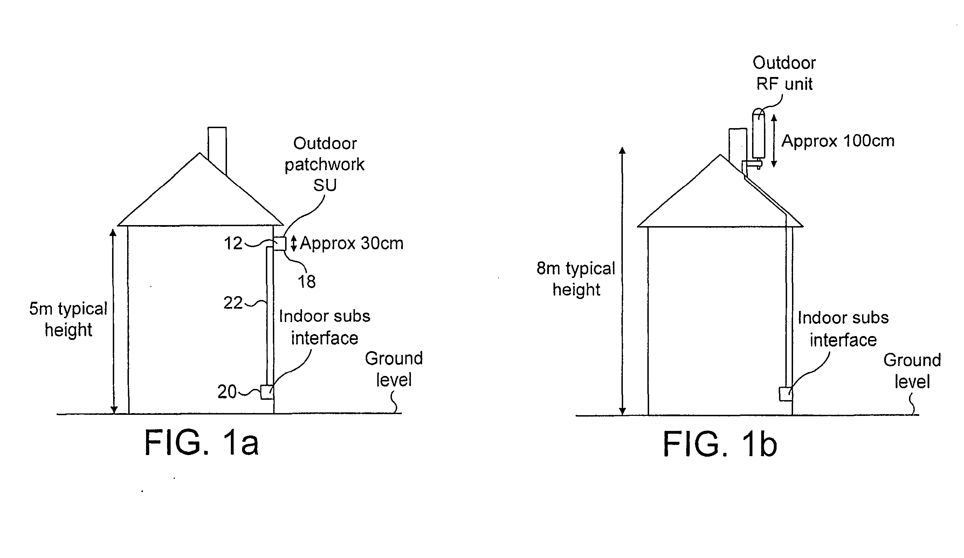

Physically, each SU 12 consists of two basic parts: an outdoor-mounted communication "head" unit 18, and an indoor interface unit 20 for user access to the network system. The two parts 18, 20 are connected by means of a suitable short-run cable assembly 22. This is illustrated in the diagram in the figure 1a.

The diagram in figure 1b shows a prior art wireless unit - approximately to scale. It can be seen that the prior art unit is significantly larger (due to the physics of the antennas) than the SU 12 of the present invention. Further, unlike the prior art unit, the SU 12 of the present invention is not required to be mounted above the roof ridge - but much lower down.

The only constraint on the mounting height of an SU 12 is that it be:
1) high enough to be normally out of the way of people and vehicles etc.,
2) eye-safe, and
3) low enough to make use of the vertical (or almost vertical) surfaces of the building 16 to form part of the patch boundary 14.

The diagram in figure 2 illustrates how a typical patch may be realised in practice.

Each SU 12 includes a transmitter sub-system and a receiver sub-system as described below, and is arranged to emit and receive IR radiation in a substantially omni-directional fashion in azimuth. In elevation, the pattern can be more collimated. The SUs 12 are also adapted to have the ability to modify this radiation pattern to take account of non-ideal patch boundaries 14. A patch boundary 14 can be thought of as an irregular polygon of 1 or more sides that are made up of the following elements
1) An opaque barrier 24 (e.g. brick wall)
2) An aperture 26 (e.g. no wall; open space)
3) A combination of these.

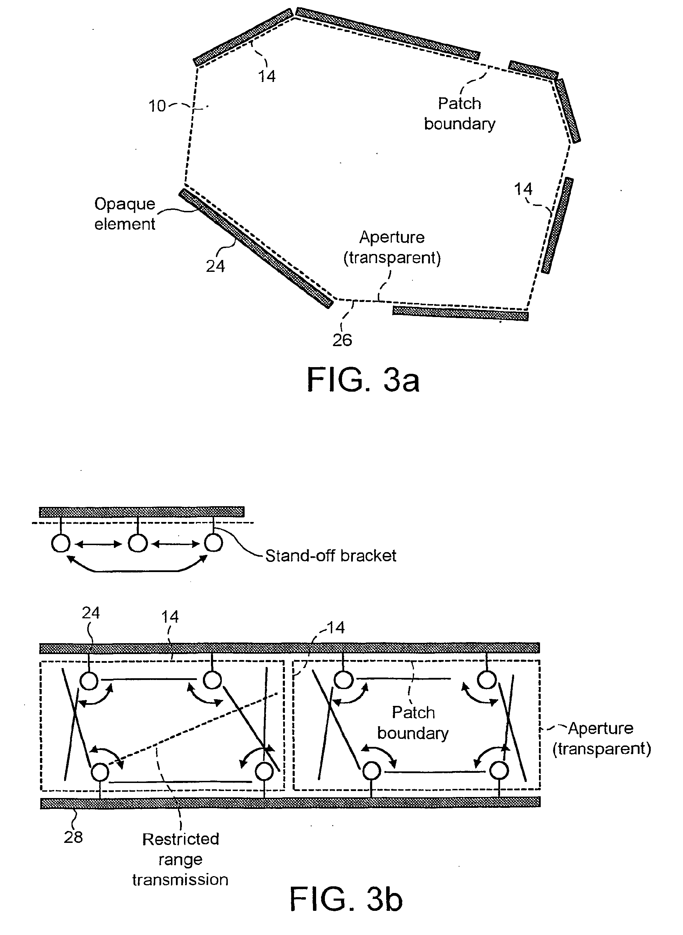

This is illustrated in figure 3a. In the real environment, many different types of patch boundary will be encountered - depending on the architecture, vegetation, topography etc.

Patch formation is simplest where the candidate patch boundary, whatever its exact shape, has entirely opaque elements. However, non-ideal boundaries 28 will be encountered in practice. To be able to cope with as many different types of patch boundary as possible, the SUs are designed to have the following features:-
1) Ability to suppress the transmission and reception of radiation over arbitrary azimuthal ranges. One well-known means of achieving this would be to:
   a) Divide into separate fixed sectors either the transmitter sub-system or the receiver sub-system or both,
   b) Arrange these fixed sectors so that a radiation axis of each respectively points in geographically different directions, but such that all form a contiguous whole; and
   c) Decrease the power transmitted by one or more transmitter sections, or the sensitivity of one or more receiver sections or both. In this way the transceiver omni-directional pattern can be modified from extending, in principle, over 360 degrees of arc, so that 270, 180, 90 degrees, etc. only were illuminated.
2) Ability to be mounted either flush with a building wall, or on a short (< 1m) stand off bracket. This is so that linear arrangements of SUs will be covisual.
3) Ability to vary the SU transmitted power or the receiver sensitivity or both. The effects of this will be to increase or limit the effective range of the unit.

Figure 3b illustrates the use of these features with specific non-ideal patch boundaries. These sorts of boundaries are likely to be encountered in high-density, low-rise, housing estates arranged along linear service roads.

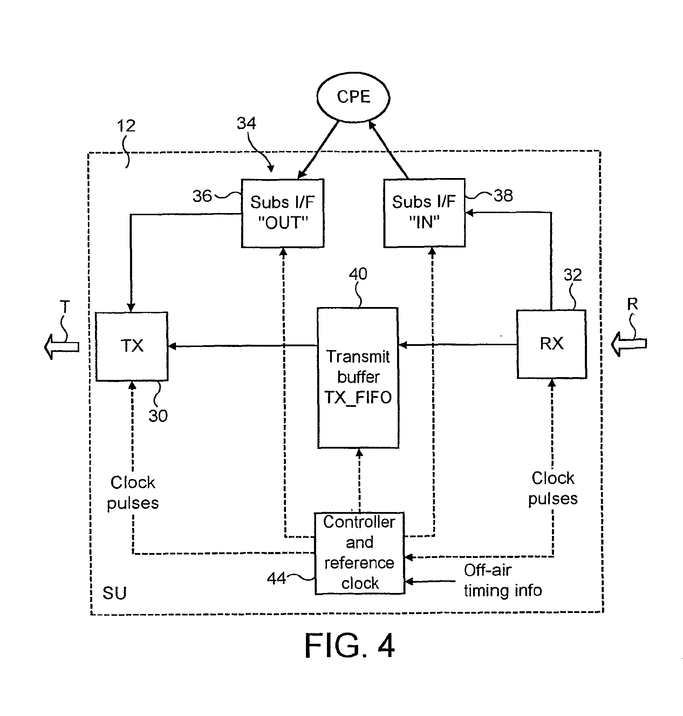

The elements of an SU 12 in a preferred embodiment can be described by reference to figure 4. There are four main components:
1) The IR transmitter sub-system (TX) 30,
2) The IR receiver sub-system (RX) 32,
3) A subscriber interface 34 consisting of 2 simplex buffers 36, 38 (FIFOs) - "out" and "in".
4) A transmit buffer (TX_FIFO) 40.

The subscriber OUT buffer 36 is connected to the IR transmitter subsystem TX 30 as is the transmit buffer TX_FIFO 40. The IR receiver subsystem RX 32 is connected to an input 42 of the transmit buffer TX_FIFO 40 and to the subscriber IN buffer 38. There are three basic data paths of concern here, a SINK path, a SOURCE path and a TRANSIT path. IR signals (represented by arrow R) detected by the receiver subsystem RX 32 are converted to digital electronic form and are presented either to the subscriber IN buffer 38 (for data being consumed at this SU - the SINK path) or to the transmit buffer TX_FIFO 40 for onward processing for another SU 12 (the TRANSIT path). The transmitter buffer TX_FIFO 40 is emptied by the transmitter subsystem TX 30 taking digital data and converting it into suitable signals for IR transmission (represented by arrow T). Digital electronic data from the subscriber OUT buffer 36 is also presented to the transmitter subsystem TX 30 for similar conversion and emission (the SOURCE path).

The operation of the various SUs 12 in a patch 10 has to be coordinated for the system to function correctly. To this end, each SU has a controller 44 including a stored program of instructions arranged to be executed at regular clock intervals ("timeslots") which are common to all the other components of the network system. For example, synchronisation of individual clocks in different SUs 12 can be accomplished by providing each SU 12 with access to the signals of a primary reference clock, for example, as is available with the GPS system.

The main types of instruction executed by the SU 12 under the control of the controller 44 are:-
1) Do nothing. (NOOP)
2) Take a data slice from the internal transmit buffer TX_FIFO 40 and convert and transmit it.
3) Receive data and append it to the internal transmit buffer TX_FIFO 40.
4) Receive data and append it to the subscriber interface in-buffer (IN) 38. This data is then processed in a manner to be described below.
5) Take a data slice from the subscriber interface out-buffer (OUT) 36 and pass to the transmitter subsystem TX 30 for conversion and transmission.

The stored program of each SU can be downloaded over the air from a central network management facility.

In the diagram in figure 2, the interconnections actually in use are shown as lines between the units. It is important to note that these interconnections may be changed very quickly - either to add/remove subscribers from a patch 10 or in response to a change of traffic loading in the patch 10 - without the need for anything (field units, installers etc.) to move physically.

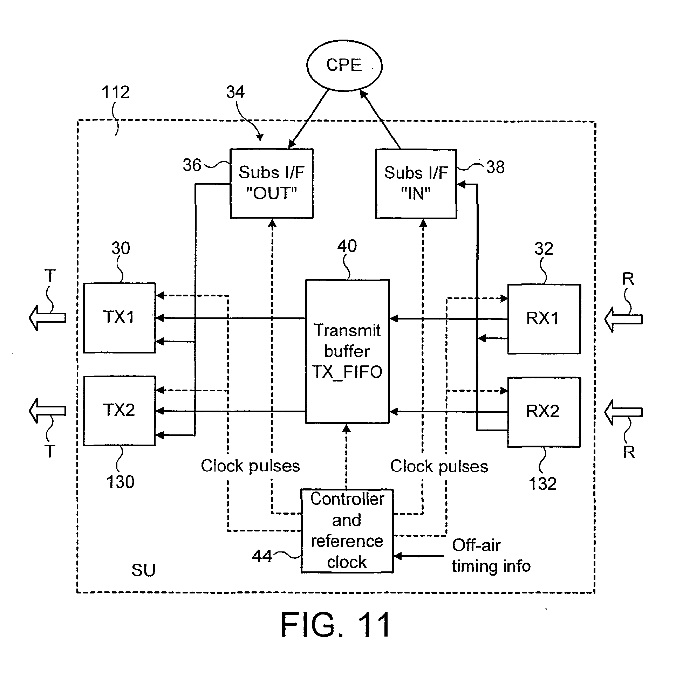

A modification of the SU12 of Figure 4 is shown in Figure 11. Like parts are designated by same reference numerals. In the SU112, one additional IR transmitter sub-system (TX2) 130 and one additional IR receiver sub-system (RX2) 132 are added. These additional transmitter and receiver sub-systems 130, 132 are connected respectively to the subscriber "out" and "in" buffers 36, 38 and to the transmit buffer TX_FIFO 40 and the controller 44 in the same way as the transmitter and receiver sub-systems 30, 32. Respective angular segments of signal transmission or reception associated with the SU112 are then allocated their own transmitter and receiver sub-system 30, 32 or 130, 132, and the controller 44 is arranged to select the appropriate pair for transmission/reception in a particular angular segment. In this way, suppression of carrier signals from the SU may be achieved over selected angular ranges.

For a finer control, additional transmitter and receiver sub-systems may be added.

### PATCH INTERCONNECTION

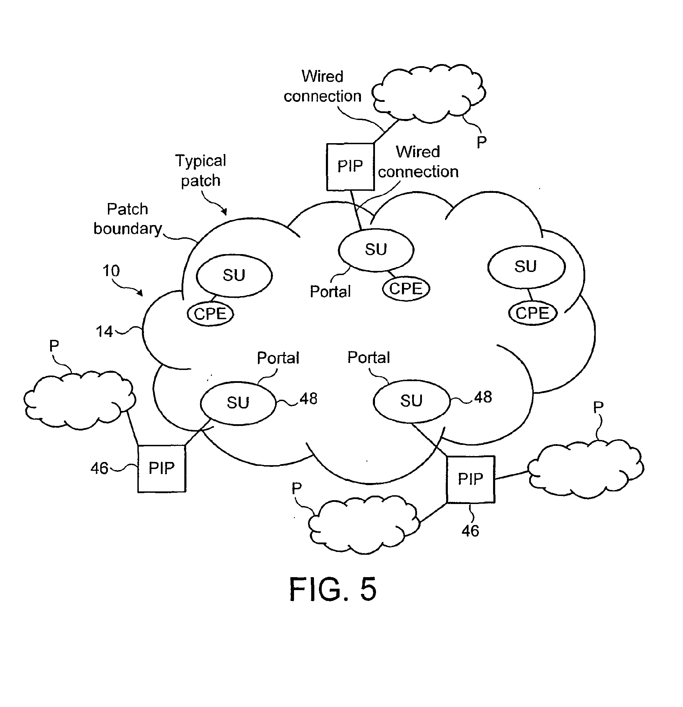

Within a patch 10, communications paths can thus be set up between multiple, arbitrary, pairs of users to allow them to inter-communicate substantially simultaneously. To allow users to communicate with other users not in the same patch 10, signals can be passed between patches 10 as is shown in figure 5.

To accomplish this, a patch 10 also contains one or more SUs 12 that are connected to a second type of unit called a Patch Interface Point (PIP) 46. To ensure optimum spectral efficiency, it is important that these connections are effected by a different medium to that between SUs 12 in the patch. In the present embodiment, this connection is achieved by means of short-run cables. Hence the PIP 46 appears to an SU 12 as its indoor interface. An SU so connected will be referred to as a "portal" unit 48 in the following. Normally one portal 48 is connected to one PIP 46, and one PIP 46 is connected to two or more portals 48 in different patches 10.

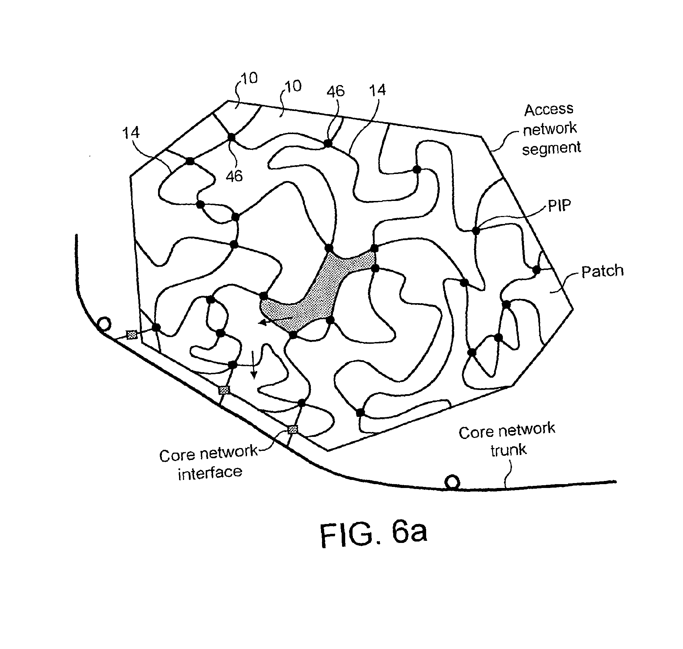

A PIP 46 can be either an indoor or outdoor mounted unit. Thus PIPs 46 are located where two or more patches are spatially substantially adjacent, for example on opposite sides of a building. A collection of interconnected patches is illustrated in figure 6a below. In this figure, only the PIPs 46 and the patch boundaries 14 have been shown for clarity.

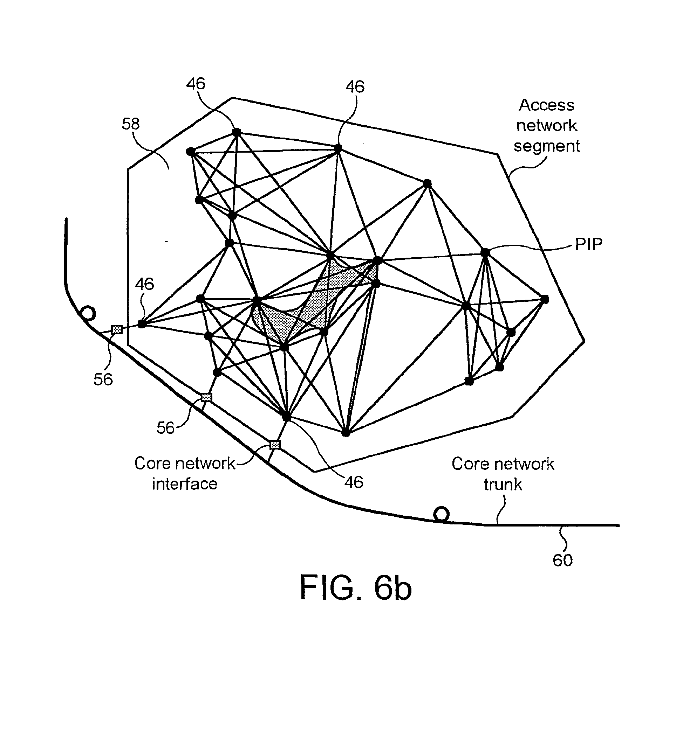

Thus, looking at the PIPs 46 and ignoring the SUs 12 in the patches 10 for the moment, we can view the overall network as a set of (in principle) fully interconnected PIPs 46 as shown in the diagram in figure 6b. The lines in this diagram represent the connections between PIPs 46 supported by the patches 10 (i.e. the SUs 12 and the area over which they are deployed). This forms a rich "fabric" over which to transport user data. There are multiple redundant routes potentially available, and this contributes substantially to the potential throughput of the network, enhances its congestion behaviour and significantly improves its reliability/availability properties.

If an SU12 in a patch 10 fails, for whatever reason, service need only be interrupted for an appreciable amount of time for the subscriber immediately attached the faulty unit. On detection of a unit fault, the patch connections may be redefined remotely so that other subscribers' service is unaffected. If necessary, a service call can be made on the particular subscriber affected to replace the SU12; no other field action is required. This is a very important factor.

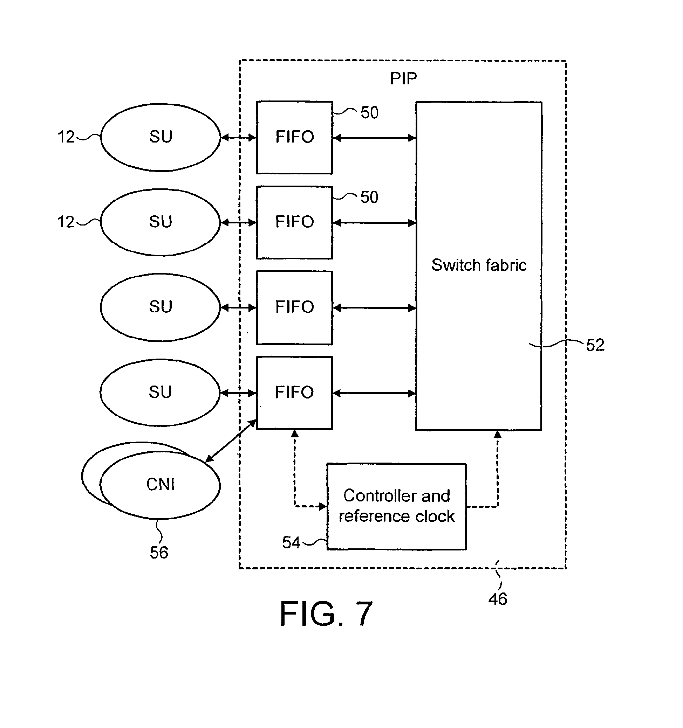

A PIP 46 can be thought of as a programmable switch, consisting of the components illustrated in figure 7 and having two sub-systems as follows:
1) A number of duplex interface buffers 50 - one for each connected SU 12.
2) A switch fabric 52, which is fed with input from the buffers 50 and which appends data to the buffers 50.

A controller 54 including a reference clock is also provided for controlling the operation of the PIP 46 such that, on each timeslot (see above), the PIP 46 does the following:-
1) Setup a switch fabric routing table for this clock tick,
2) Read all the input buffers IN_FIFO 50,
3) Operate the switch fabric 52 according to the switching table so that switch input data is moved to the appropriate switch output ports.
4) Append the output interface buffers OUT_FIFO 50 with the contents of the switch output ports.

In this way, user data is successively transferred between a source SU 12 and a destination SU 12 - traversing possibly many patches and PIPs 46 on the way.

Of course, the PIPs 46 may also be interconnected by point-to-point wireless links, such as supported by existing IR or RF link products. However, this has the potential disadvantage of providing additional equipment for installation, maintenance and management, and may cause interference problems within patches.

To understand why the present invention is superior to conventional pico-cell technology, consider a scenario in which a base-station (BS) corresponds to a PIP, and subscriber outstations (OS) correspond to the SUs. All the OS in a pico-cell would be in line of sight with the BS (though not necessarily with each other) and one OS would only communicate with the BS. In a static situation this would work. However, there are drawbacks to this approach for the following reasons:
1) As the system grows to cover more subscribers, it will be necessary to interconnect patches/pico-cells at arbitrary points. In the BS/OS model this will require a new base-station. In the patchwork model, all that is required is the connection of a PIP 46 to an existing SU 12. This will be physically easier and cheaper.
2) Allowing full/arbitrary interconnection of SUs 12 allows redundant routing within a patch 10 - e.g. to mitigate temporary loss of line of sight to a portal 48. In the BS/OS model this would not be possible.
3) To achieve the best spectral efficiency, it is preferred that all the SUs 12 in patch 10 be in line of sight of each other. However, this may be relaxed in the early evolution of networks according to the present invention, so that sparsely populated patches are possible. This means that all the SUs 12 in a patch 10 can be connected to a suitable PIP 46 by means of the resultant logical mesh of connections in the patch 10. The pico-cell model does not allow this flexibility.

The PMP, or pico-cell, topology is, in fact, an instance of one of many topologies that are possible to implement using the programmable nature of patch components - see below. This invention therefore encompasses prior-art system topologies, but in a more general and practical way for broadband, high subscriber density systems.

### CONNECTING TO A BACK-HAUL NETWORK

Where subscribers require services only available by means of connecting to a core (or trunk) network (for example to communicate with other subscribers not using the present invention) a third type of unit, a core network interface (CNI) 56 is used as shown in Figure 6b. This ensures that signals can pass from a segment 58 of a network according to the present invention to a trunk 60 of the core network and vice versa. This type of connection requires more functionality than is required for a PIP 46, and is needed in far fewer locations in a network according to the present invention than are PIPs 46. Hence, economics dictate the need for an additional, specialised unit to carry out this role. There may be one or more CNIs 56 required to equip a given area. CNIs 56 are illustrated as square boxes in the diagram in figure 6 and are connected to one or more PIPs, as shown, preferably by means of cables.

A CNI 56 is solely concerned with data interfacing and not with service coverage of subscribers. Therefore, a CNI 56 can be located anywhere in the network but preferably near to a suitable core-network point of presence.

The data from all the connected subscribers arrives at a CNI 56 in a time-scrambled fashion in that consecutive timeslots are likely to contain data from different users. Therefore, a key job of the CNI 56 is to process such aggregated subscriber data streams and present these, suitably disentangled, to the core network.

The CNI 56 can be designed so that this de-scrambling can be separated from the standard data aggregation and interfacing functions to the core network. In this way, a network according to the present invention can be independent of the actual transport protocols in use by the network operator and subscribers.

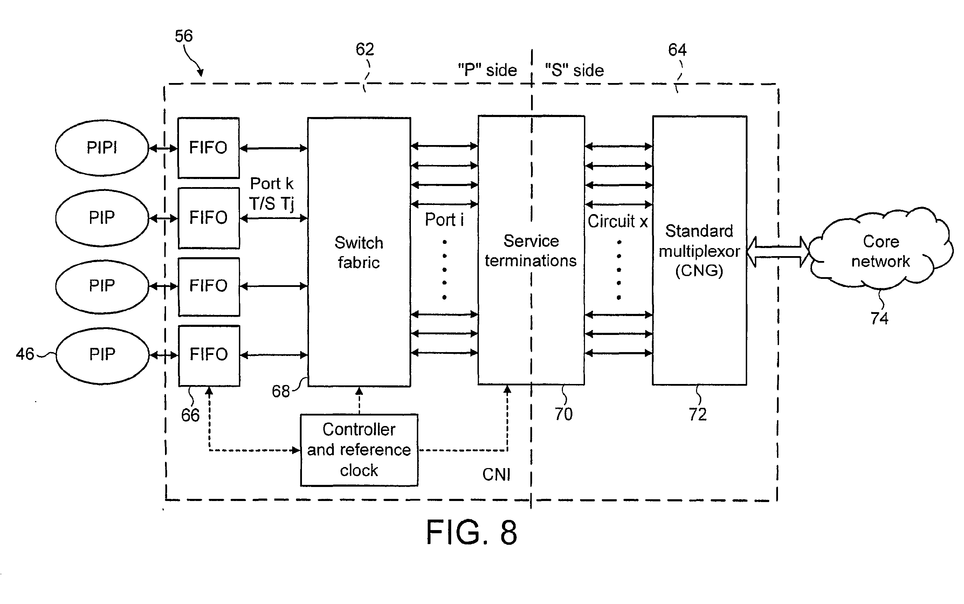

The CNI 56 is analogous to the PIP 46 in its internal functionality, as illustrated in figure 8. However, the CNI 56 has an additional function for interfacing to a standard core network. Referring to figure 8, the CNI can be thought of as consisting of two halves, 62, 64, labelled the "P side" and the "S side" in the figure. On the P-side, data is handled according to the principles and operation of the present invention. On the "S-side" data is handled according to some standard transport protocol, for example, ATM, IP, etc.

The main sub-systems of the CNI 56 are:-
1) A number of duplex interface buffers 66 - one for each connected PIP 46.
2) A switch fabric 68 that is connected to the interface buffers 66.
3) A service-termination sub-system 70 that consists of a number of buffers (in principle, one per service connection in the network segment). These buffers are connected to the switch fabric 68 on one side and to an appropriate service multiplexor (core network gateway (CNG)) 72 on the other.
4) The CNG 72 (an off-the-shelf component) interfaces the service terminations to a standard core network interface 74 (e.g. OC-3/STS-3c, STM-4 etc.)

A controller 76 including a reference clock 78 controls the operation of the CNI 56 such that it performs the following functions in each system timeslot:-
1. Read data from the PIP interface buffers (FIFO) 66 and place such data on the corresponding port buffer of the switch fabric 70.
2. According to the switch fabric routing table, move timeslotted data from the input port side to the output port side. In principle, there is one output port for each user circuit currently active. The job of the CNI switch fabric 68 is therefore to move data in timeslot Tj on any port (k) to the appropriate channel (x).
3. Again, according to the switch fabric routing table, move data from a user channel x to an appropriate input port number and timeslot. (The complimentary operation to operation 2)).
4. The data on each user channel is buffered by the service termination unit 70 to interface with a standards-based networking transport protocol supported by the CNG 72. The output of the service termination unit 70 is a set of data circuits suitable for aggregation by the third-party CNG multiplexor 72.

### SYSTEM END-TO-END SYSTEM OPERATION

To understand, in abstract, how the components have to be configured so that the network can function, consider the following.

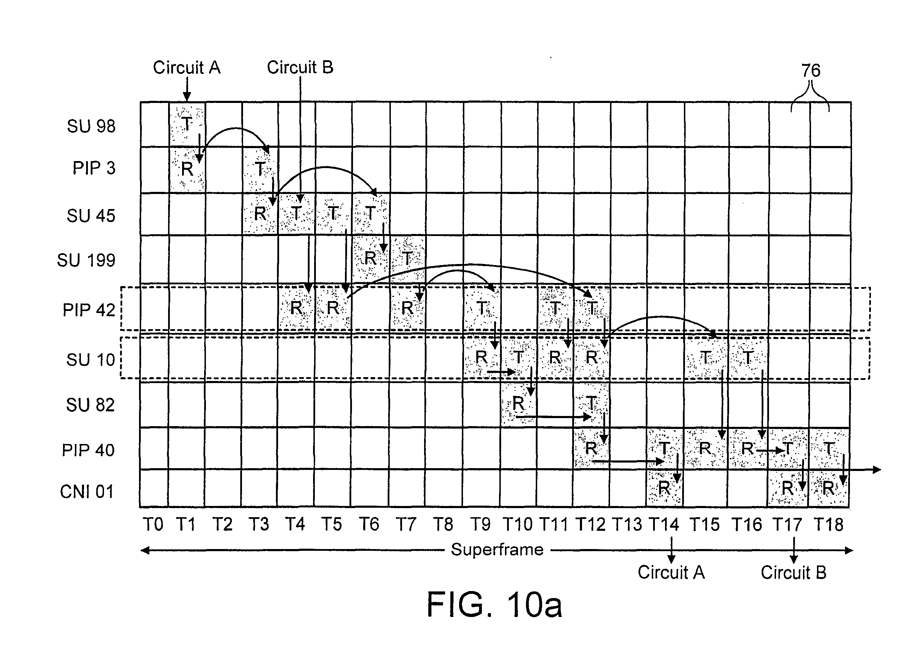

The present invention employs a time-division multiple access (TDMA) regime, which is a standard technique - related to the synchronisation outlined above. According to this, one can visualise the activities of all the units in a segment of a network region by means of a diagram as illustrated in figure 10a. In this figure, time, quantised in terms of the system timeslots, TO, TI, T2 etc, is drawn along the x-axis. The y-axis is divided up amongst the SUs 12, PIPs 46, and CNI(s) 56. Each cell 76 in this table can be used to represent what each such unit is doing in its particular time-slot. The time axis is cyclical in that, after a certain number of time slots all activities are repeated. We refer to this repeat period as a "superframe" in the following description

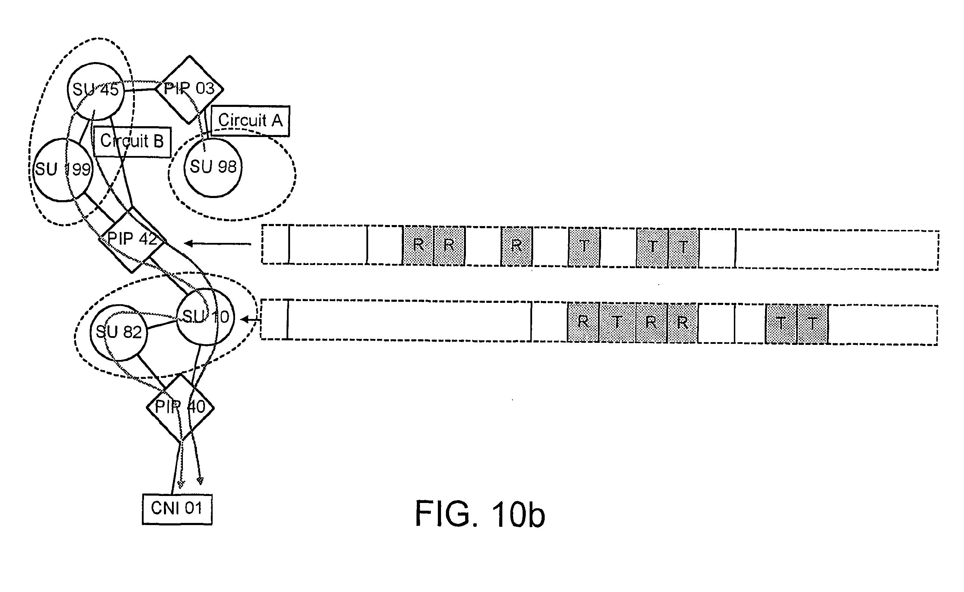

The diagram in figure 10a also shows two "circuits", designated "circuit A" and "circuit B", in a fragment of a network shown in figure 10b. Each such circuit is supported by the coordinated actions of the associated SUs 12 and PIPs 46 as described above. By way of example, the user of circuit B has requested, and been given, twice the bandwidth of the user of circuit A. Circuit B thus uses two timeslots whereas circuit A uses only one timeslot.

Network management software, as discussed below, is responsible for determining and configuring the action of the appropriate device (i.e. SU 12, PIP routing table, CNI routing table) in each timeslot of the superframe (or each cell of the above table) to achieve the required data connections. The management software carries out this task in parallel with the network operation, whilst users are making requests for service.

The table of figure 10a, when configured by the network management software, can be viewed as a set of horizontal strips - one for each unit 12, 46 etc - each strip then represents a cyclical list of detailed operating instructions (or "operating program") for each unit. This is illustrated in figure 10b for a respective PIP 46 and SU 12. It is these and related lists that are loaded to the network unit by the management system to allow the network to operate.

### NETWORK MANAGEMENT

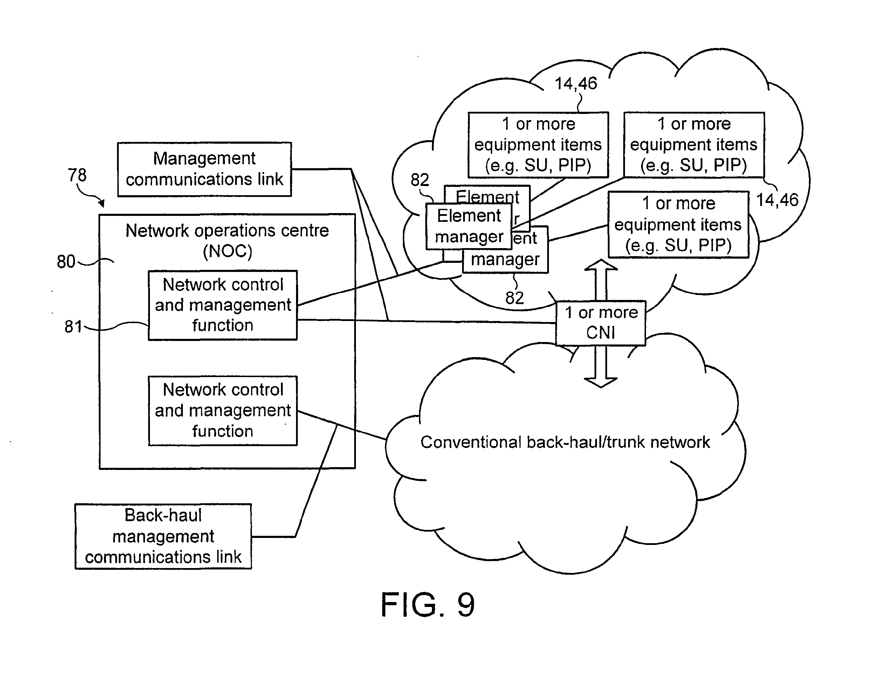

The network components of the present invention are configured and otherwise managed remotely by server software of a network management system 78, for example, based at the network operator's network control centre 80, or IT control room (in the case of private networks). This is illustrated in figure 9.

During routine operation, when the network is carrying subscriber traffic, in principle no intervention by the network management system is required. The SU, PIP and CNI units operate in an autonomous, though co-operative, fashion as described above to transport data through the network. However, the services of the network management system are required if the network elements need to be configured or re-configured.

In this instance, the network management system 78 makes use of a separate network control and management centre 81 to send and receive commands and data to/from the network elements (SU 12, PIP 46 etc) via one or more proxy "element manager" 82 located at convenient points in the network (for example at a CNI site), as is well known from public telecommunications networks.

The management network used by the network management and control centre 81 can be implemented on top of the network services provided by the present invention - a so-called "in-band" management network - again, as is common to public telecommunications networks.

### Routine and Operational Processes.

As mentioned above, the economics of network elements mean that their internal clocks will not be perfect and hence will drift over time - i.e. run faster or slower in relation to the network clock standard. Highly accurate standard clock signals are available from dedicated primary reference clocks such as a Cs atomic clock, or potentially more conveniently, from the signals derived from the globally available Global Positioning System (GPS) satellite network. By way of example, continuous unit synchronisation could be achieved by the following:
1) As part of a routine operation, all network elements periodically transmit their internal clock signals when synchronised with an appropriate standard.
2) Also as part of a routine operation, all units turn on their receivers periodically to detect these signals. This information can be used by units to synchronise their internal clock (by various well-known means) and then to re-transmit the signals according to 1) above.

The present invention needs to be internally synchronised as stated above. However, this synchronisation does not necessarily need to be the same as, or related to any synchronisation in the user-level, e.g. EI/TI, services carried by the present invention.

### NETWORK INSTALLATION

The provision of services within a new region supported by the present invention is achieved by means of the following activities on behalf of the network operator:-
1. Determination of which subscriber prospects will take service and when.
2. Build-out of the network infrastructure.
3. Steady-state operation of the network - e.g. to ensure service level agreement (SLA) compliance and to manage faults and subscriber chum.

The architecture of the present invention allows a great deal of flexibility (unlike PMP and wired systems) over the timing and ordering of these activities, and exactly which is used will depend on a particular operator's strategy and finance management.

Advantageously, the provision of services within a new region may comprise the following steps:-
(A) Determining, by means of digital terrain map data or by field observation, what existing building configurations in a sector can be used as patches.
(B) Placing field units on buildings such that a "patchwork" is created - possibly using a GIS/DTM to facilitate this.
(C) Computing a "operating program" for each subscriber unit and PIP in the network (patchwork). This operating program tells its unit to either operate its transmitter or receiver (or possibly both) for specified periods of time.
(D) Downloading the "operating program" to each unit in the network.
(E) Instructing all the units in the network to commence executing their operating program. This will cause physical layer connectivity to appear between specified locations in the network.
(F) As the network changes, either by addition or removal of subscribers or by the modification of their service contracts, critical unit operating programs are recomputed, downloaded, and set into execution as above.
(G) Connection of suitable, potential standard equipment to the network, where required, at subscriber premises and at the core network interface.

By way of example, the following illustrates how a network according to the present invention could be built in a new region.

### A) Determination of possible patch structure for the region.

This is carried out by suitable network planning software ― using a digital map, or photographic data as input. In contrast to prior art systems that require three-dimensional data because building roof geometries are critical in these systems, planning for the present invention requires, in principle, simpler two-dimensional (plan) data. This is because the present network of patches 10 is defined principally by vertical obstructions, such as walls, or their absence. This critical information on the disposition of building walls and other features is available from 2-d map data.

In terms of the types of build-out strategy, there are many possible, the following are examples:-
1) Continuous, organic growth outward from a suitable core-network point of presence and CNI 56 ("crystal growth" model) - all SUs 12 earning revenues.
2) First phase: build infrastructure - low density "skeleton" network of SUs 12 and PIPs 46 not all of which are earning revenue. Second phase: increase the density of the skeleton network by adding revenue-generating subscribers at various areas of the skeleton.
3) A mixture of the crystal and skeletonic growth approaches.

The present invention can support whichever method is used in practice.

### B) Based on sales and marketing input, installation of field units, and connection of suitable customer premises equipment to the indoor units.

As noted above, the SUs 12 and PIPs 46 require straightforward mounting - at eaves' height at maximum. In the first instance, this installation is envisaged to be done by the operator (or contractors) rather than the subscribers themselves.

### C) Computation of operating programs for SU, PIP and CNI units.

This uses the principles described above to ensure that the system units are already primed with appropriate sets of instructions to support the current, or projected, network loading.

### D) Downloading operating programs to all units.

When a circuit has been computed - in response to a subscriber's service request - the operating program is dispatched to each unit in the circuit (using the management network).

However, the program does not execute immediately on download, but following the next step.

### E) When all programs have been received satisfactorily, the instruction of all units to begin executing their programs.

This "two-phase commit" approach ensures that the circuit structure of the network is not damaged by out of context programs - which could occur if, for some reason, one or more downloads were unsuccessful.

### F) Carrying out basic service tests before stable operation.

When all programs are running, this means that, in principle, all users have their desired connections. This step checks that this connection is useable before the subscriber sends data, by carrying out certain end-to-end tests and performance checks. If the tests are passed, the subscriber is free to send data. If not, then further diagnostic work will need to be done by the operator.

### G) If service or network configuration changes, determining which units are affected and then re-doing the activities from step C) above.

If a subscriber wishes to change his circuit - either to remove it or to change some of its parameters (e.g. maximum bandwidth), then the old allocations are freed - at a suitable time, and a new circuit computed - given the constraints of all the other traffic circuits being handled simultaneously by the network.

### Alternatives

The above description concerns certain preferred embodiments of the present invention. It will be appreciated that various modifications are possible, and the following alternative arrangements are also entirely within the scope of the present invention.
1) Each SU 12 is preferably fixed. However, some degree of mobility or portability is possible.
2) Whilst the head unit of the SU 12 is preferably mounted on the outside of a building, this may be mounted in-doors, behind a window or other suitable aperture.
3) To allow a portal SU 48 to earn revenues, as well as ordinary, non-portal SUs 12, provision may be made for an SU 12 to connect to the subscriber's customer premises equipment as well as to a PIP 46.
4) The invention has focussed on IR as the carrier medium, but other higher-frequency areas of the spectrum (such as visible light, ultra-violet) can be used in principle.

The present invention as described above has a number of significant advantages, some at least of which are set out below.

### Simplicity of main product design - Economics and Financials

14. Access network solutions can be built from only 3 types of product - with large commonalties promising early high-density deployment.
15. Products can be inherently small in size, and do not require roof mounting - obviating planning consent issues.
16. There is no need for moving parts to orientate or re-orientate products once installed.
17. Technology focus is on the PHY/MAC layer - Edge/Bearer services/technologies are not constrained - e.g. voice, data, multi-media all possible.
18. Design flexibility - allowing for third-party IP and ATM etc solutions to be built on top of the system.
19. Test and manufacture can be streamlined - minimising amount of unit and integration test required.
20. The amount and degree of development and test equipment and skills required may be minimised.
21. Development timescales may be reduced.
22. The amount of custom development required - hardware and software - may be minimised.
23. The amount of 3rd party integration required and license fees may be minimised.
24. The amount of tooling - casework, internal mouldings etc. - may be minimised.
25. The introduction to and manufacture complexity - number of suppliers - may be minimised.

### Choice of system architecture

1. SUs can be deployed very densely from day one. The ultimate density achievable is related to on-air bit rate, not product or system architecture.
2. The system will have built-in redundancy, plus the possibility of adding further redundancy at higher layers.
3. The system inherently overcomes problems with IR propagation in adverse weather conditions.
4. The SUs can be used indoors as well as outdoors - potentially both.
5. The system can cope with multi-cast/broadcast as well as point-to-point services.

### Avoiding limitations of geographical coverage

The system exploits key features of urban and semi-urban geography which are problematic to conventional systems.

### Avoiding delays due to regulatory issues

1. Radio Operating licenses are not required.
2. Potential small size facilitates planning consent issues.
3. Certain onerous (ETSI) standards need not be complied with.

### Key Network Operator Benefits

1. High bandwidths are available, in principle, to all customers,
2. A rich set of revenue-earning service types and classes available.
3. The up-front capex requirement is lower - no base-stations etc.
4. The break-even point is much earlier - revenue earning can begin much quicker.
5. IR involves no regulatory licensing issues at present.
6. The deployed SU is likely to be small in size and unobtrusive from the point of view of planning consents etc. High mounting is not required, nor any specific alignment. This makes installation very much easier and cheaper from a manpower / health and safety point of view. There is also the possibility of subscriber units being subscriber fitted/installed.
7. Flexible network planning and management.

Network/System Management techniques/procedures can be inherently automated and simple. There is no need to orientate an SU either on installation or subsequently.

Some important feature aspects of the present invention, as described above, are given below.
1) The use of non-visibility (i.e. building obscuration) as a system feature, is as important as visibility in the creation of patches and hence of a viable network.
2) Patches are a novel means of space division multiplexing - allowing very high spectrum re-use. This is especially required for infrared where the generation and reception means are practically restricted to a single frequency channel - unlike competitive RF systems.
3) The use of substantially omni-directional infrared units serves to mitigate pointing and alignment issues.
4) The use of PIPs and short run wiring to interconnect patches.
5) The use of simple, low-cost, globally, pre-programmed (or data driven) units to orchestrate system behaviour.
6) The use of a pure TDMA structure to achieve the requisite routing of data. (The efficiency of which is derived from the combination with 2) above) This is done without the need to make use of specific routing protocols (e.g. IP, ATM) and hence allowing the network to be entirely analogous to a raw wired network.

Further specific features of the described invention are mentioned in the following paragraphs, in order to illustrate the flexibility and the distinctive nature of the present invention.
1. Subscriber equipment can be stationary or to a certain extent mobile or a mixture of both types.
2. The units operate in a peer-to-peer manner - in contrast to cellular base-station/outstation systems.
3. The present system does not require base-stations - or any other high-profile transceiving equipment or real-estate.
4. Information transferred in a series of steps or hops between subscriber equipment and patch interface equipment (PIPs).
5. The patches, by means of the PIPs, are therefore interconnected in an arbitrary fashion - suitable for the most efficient transfer of signals between local subscriber or between subscribers and the core network.
6. The SUs and PIPs can be regarded as providing a "patchwork" of interconnected transceivers covering a geographical area.
7. Uses principally wireless transmission - obviating the need to bury or string cables. Patches are interconnected by means of PIPs which typically involve short (< 100m) cable runs between the optical units and the interconnection unit.
8. Preferably, SUs only transmit for two main purposes: 1) periodically to propagate timing information across the network, and 2) when transiting user or system information.
9. Preferably, SUs only receive for two main purposes: 1) periodically to detect timing information for unit synchronisation, and 2) for user or system information.
10. A SU is connected to an indoor user interface by means of typically short (< 100m) runs of suitable cable.
11. In an example of the present invention, subscriber units are mounted on structures (e.g. buildings, lamp-posts, bridges, etc.). These structures may or may not be subscriber premises. A subscriber unit need not be connected to any subscriber (in which case, all information is retransmitted by the unit; none consumed or produced.)
12. One subscriber unit may provide service to more than one user; for example, in a block of flats (or other multi-dwelling unit).
13. The present system employs a radiation pattern which is substantially omni-directional in azimuth (in a horizontal plane) and collimated in elevation (in a vertical plane). This is to obviate the need for moving parts for re-alignment and to facilitate installation and placement issues.
14. To fine-tune the pattern of radiation to take account of awkward patch geometries - the omni-directional nature of the radiation may be modified by nulling various angular ranges. This is the opposite of mesh systems.
15. The present system employs low-power radiation so that 1) it is eye-safe in many deployments and 2) the unimpeded range (see next point) is restricted to a maximum of ~ 150m.
16. This range implies that problems with atmospheric absorption and scattering are reduced, or eliminated, compared to long-range systems - especially for infrared.
17. One of the functions of patches is to allow transmit power to be increased to mitigate weather effects - without adversely affecting interference.
18. The present system makes substantial, inherent use of space-division multiplexing which exploits typical mass market geography and building structure and unit positioning so that radiation is contained within well-defined, small geographic areas, or "patches". What other systems consider to be a problem is exploited to the advantage of this system.
19. The SUs are therefore preferably mounted below roof height to allow bounded patches to form. Patches are therefore defined by physical obstructions in the built/natural environment.
20. Patches can in principle be physically overlapped. For example, in a high-rise urban layout, because of the collimated vertical radiation pattern of the units, by mounting units at different height planes, separate patches can be formed - which allows even higher spectral re-use and provides in principle more bandwidth to be available to subscribers.
21. In principle, traffic can be injected and extracted from any SU in the network; allowing flexibility in the structure and growth of network.
22. In the present invention, preferably, all the SUs in a patch are visible to each other. This forms a logically fully interconnected network topology.
23. In the case of a single SU failure; this only denies service to the particular subscriber or subscribers associated with that SU. In principle, because of the patch interconnection topology, any other unit in the patch can take over to maintain overall service to others.
24. To minimise jitter of signals, each subscriber is connected back to either the core network interface or another subscriber unit by means of preferably at least one pre-defined path. Such a path consists of several steps between subscriber units and PIPs.
25. Because of the omni-directional nature of SUs, in principle, several sets of paths can be computed and used with little delay to traffic.
26. Again, because of this interconnection scheme, an SU may be logically connected to more than one other SU.
27. The duration of the interconnection of the SUs defines the bandwidth of that logical connection. This can be varied flexibly the management system, in principle on very short timescales, to take account of (for example, diurnal) variation in traffic flows and demand.
28. The present invention provides a physical interconnection means for subscribers to each other or to a core network interface. This physical interconnection means is, in principle, for the subscriber's equipment point of view entirely equivalent to a dedicated wire connection.
29. In addition, the present invention has means to allow several unrelated users to share the same physical connection.
30. The advantage of the transport protocol independent connection scheme is that that operators or users are not forced to use a particular technology (such as ATM or IP) in deployment - but, in principle can use their existing equipment.
31. An SU may simultaneously receive or transmit information. This is property defined by the current configuration table of the SU - and is not a fundamental feature of its architecture or design.
32. A whole patchwork system acts as a distributed switch.
33. In conjunction with field-deployed units, there is preferably a network management and planning system with which the operator can configure and monitor the system. The central management and planning systems communicate with the field-deployed units preferably by means of an in-band management network - i.e. supported by the patchwork network itself.
34. When a subscriber is acquired, or changes his service contract, preferably, the network planning system is used to determine one or more interconnection paths of that subscriber to his chosen destination. This might be another subscriber (as in, for instance, a campus or LAN interconnect scenario), or a trunk network.
35. To ensure that the individual field-deployed components of the system are as simple as possible, their operation is defined principally by "program" data downloaded to them from the management system. This data for example, determines when a subscriber unit transmits and receives. By arrangement of appropriately complimentary data configurations in each SU in each patch, data can be transferred at high speed by relatively "dumb" units. This means that the development and manufacturing costs and risks can be minimised - at the expense of more sophisticated management. In this way, each SU does not require to have and network addressing logic.
36. The SU transceiver may operate in principle at any frequency provided that the radiation is rapidly attenuated by the structures in which the system is embedded.
37. Preferably the system makes use of infrared transmission and reception, as this, at present, does not require any operating licence.
38. SUs may be programmed to employ more than one frequency if the generation and detection means allow it (and this is economically necessary).
39. The SU may make use of variously polarised radiation; for example, circularly polarised. This is to mitigate any reflection effects within the patch.
40. Because of the multiple path capabilities, backup path or redundant paths are a possibility - allowing for high resilience.
41. In many telecomms systems, the information that is moved around the network, needs to be encoded and decoded at various stages as it encounters different physical media. This is especially true of mesh radio systems that use ATM as a native transport protocol. At each hop, all the on-air signals have to be decoded into ATM cells - any destined for the current node extracted, and the rest re-encoded and transmitted. This means that an ATM switch and protocol stack are required at each network hop. This is not required for a patchwork SU, as the architecture is designed such that information is only coded and decoded at the start and end points and nowhere else on the way. This means that a basic SUs can be very simple, and hence low-cost. Where required, information is decoded in the attached subscriber interface attached to an SU. The PatchWork architecture promises to be able to support any high-level transport protocol (e.g. ATM, IP) without unnecessary encode/decode operations. This means that a major part of the product development does not depend on these complex, third party standards: a significant factor in reducing development costs, risk and time-to-market.
42. In principle, SUs may be interconnected so that a "broadcast" or more strictly a "multicast" mode of operation can be achieved. This mode is likely to be popular with operators/customers used to cable networks for the distribution of video where multiple users are likely to be watching at the same time (e.g. for sports events, news, etc.).

## Claims

1. A broadband mass communications network system comprising:
a plurality of zones (10), each including a plurality of subscribers having wireless communication means (12) for transmitting and receiving signals within the zone, and
interface means (46) for connecting the plurality of zones respectively with one another, the interface means employing a form of communication means other than that provided within the zones,
wherein;
each zone is formed as a patch (10) comprising:
a plurality of subscriber units (12), each associated with a respective one of the subscribers for transmitting signals to and receiving signals from the other subscribers within the patch, the plurality of subscriber units within the patch being in direct line of sight communication with one another,
each subscriber unit comprising an indoor interface unit (20) for user access to the system and an outdoor mounted communication unit (18) for the transmission and reception of signals,
each subscriber unit being arranged to impress the signals on a carrier signal operating at frequencies in the range from infra-red to ultra-violet and to transmit the carrier signal substantially omni-directionally, and
objects (16, 24, 26) within and/or around the respective patch arranged to define boundaries (14) for the patch and to limit the propagation pattern of the carrier signal,
and in that:
the interface means comprise patch interface points inter-connecting respective patches, the patch interface points being connected to respective subscriber units from at least two adjacent patches.

2. A system according to claim 1 **characterised in that** at least some of the subscriber units within a respective patch are provided with means (44) for suppressing the transmission and reception of the carrier signals.

3. A system according to claim 2 **characterised in that** the suppression means are arranged to suppress the transmission and reception of signals over selected angular ranges.

4. A system according to any preceding claim **characterised in that** each subscriber unit comprises a controller (44) for co-ordinating the subscriber units within the associated patch.

5. A system according to any preceding claim **characterised in that** the said objects defining boundaries for the patch comprise one or more opaque barriers (16, 24).

6. A system according to any preceding claim **characterised in that** each patch interface point is arranged to communicate with the associated subscriber units (48) by means of respective communications cables.

7. A system according to any preceding claim further comprising one or more core network interface units (56) arranged to provide an interface between the network system and a conventional trunk network (60).

8. A system according to claim 7 **characterised in that** respective patch interface points are arranged to communicate with the core network interface unit(s).

9. A system according to claim 7 or 8 **characterised in that** the core network interface unit comprises a first circuit (62) arranged to communicate with the associated patch interface point, a second circuit (64) arranged to communicate using a standard transport protocol with the conventional trunk network, and a core network gateway (72) for providing an interface between the first and second circuits.

10. A system according to any preceding claim further **characterized by** management software (78) arranged to co-ordinate the operation of elements of the network system based on a multiplexing regime.

11. A system according to claim 10 **characterised in that** the multiplexing regime is a time division multiplexing regime.

12. A method for providing broadband mass communications comprising:
forming a plurality of zones (10), each including a plurality of subscribers having wireless transmission means (12) for transmitting and receiving signals within the zone, and
inter-connecting the plurality of zones respectively with one another by way of interface means (46), the interface means employing a form of communication other than that employed within the zones, and
wherein each zone is formed as a patch (10) by:
providing each of the plurality of subscribers with a respective subscriber unit (12) for transmitting signals to and receiving signals from other subscribers within the patch, each subscriber unit comprising an indoor interface unit (20) for user access to the system and an outdoor mounted communication unit (18) for the transmission and reception of signals,
locating the plurality of subscriber units within the patch in direct line of sight communication with one another,
impressing the signals on a carrier signal operating at frequencies in the range from infra-red to ultra-violet,
transmitting the carrier signals substantially omni-directionally,
employing objects (16, 24, 26) within and/or around the respective patch to define boundaries for the patch and to limit the propagation pattern of the carrier signal, and
inter-connecting respective patches with the interface means, which comprise patch interface points connected to respective subscribers from at least two adjacent patches.

13. A method according to claim 12 **characterised by** suppressing the transmission and reception of the carrier signals by at least some of the subscriber units within a respective patch.

14. A method according to claim 13 **characterised by** suppressing the transmission and reception of the said carrier signals over selected angular ranges.

15. A method according to any of claims 12 to 14 further **characterised by** providing one or more core providing network interface units (56) forming an interface between the network system and a conventional trunk network.

16. A method according to claim 15 **characterised in that** respective patch interface points are arranged to communicate with the core network interface unit(s).

17. A method according to any of claims 12 to 16 further **characterized by** co-ordinating the operation of elements of the network system based on a multiplexing regime.

18. A method according to claim 17 **characterised in that** the multiplexing regime is a time division multiplexing regime.

## Patentansprüche

1. Breitband-Massenkommunikations-Netzwerksystem, welches aufweist:
eine Vielzahl von Zonen (10), welche je eine Vielzahl von Teilnehmern beinhalten, die kabellose Kommunikationsmittel (12) aufweisen, um Signalen innerhalb der Zone zu Übersenden und zu Empfangen, und
Schnittstellenmittel (46), um die Vielzahl an Zonen entsprechend miteinander zu verbinden, wobei die Schnittstellenmittel eine andere Form der Kommunikation verwenden, als innerhalb der Zone vorgesehen ist,
wobei:
jede Zone als Feld (10) ausgebildet ist, welches umfasst:
eine Vielzahl von Teilnehmergeräten (12), von denen jedes einem zugehörigen Teilnehmer zugeordnet ist, um Signale zu den anderen Teilnehmern innerhalb des Feldes zu Übersenden und von diesen zu Empfangen, wobei die Vielzahl an Teilnehmergeräten innerhalb des Feldes zueinander eine Kommunikation in direkter Sichtverbindung aufweisen,
jedes Teilnehmergerät ein Innen-Schnittstellengerät (20) für den Benutzerzugang zu dem System und ein außen montiertes Kommunikationsgerät (18) zum Übertragen und zum Empfangen von Signalen aufweist,
jedes Teilnehmergerät so angeordnet ist, um Signale auf einer Trägerfrequenz aufzutragen, die auf Frequenzen im Bereich von Infrarot bis Ultraviolett arbeitet, und um die Trägersignale im Wesentlichen in alle Richtungen zu übertragen, und
Objekte (16, 24, 26) innerhalb und/oder rund um das entsprechende Feld, welche angeordnet sind, um für das Feld Begrenzungen (14) festzulegen und um das Ausbreitungsmuster des Trägersignals zu begrenzen,
und wobei:
die Schnittstellenmittel Feld-Schnittstellenpunkte aufweisen, welche entsprechende Felder untereinander verbinden, wobei die Feld-Schnittstellenpunkte mit entsprechenden Teilnehmergeräten aus zumindest zwei angrenzenden Feldern verbunden sind.

2. System nach Anspruch 1, **dadurch gekennzeichnet, dass** zumindest einige der Teilnehmergeräte innerhalb eines entsprechenden Feldes mit Mitteln (44) ausgestattet sind, um die Übertragung und den Empfang der Trägersignale zu unterdrücken.

3. System nach Anspruch 2, **dadurch gekennzeichnet, dass** die Unterdrückungsmittel so eingerichtet sind, dass sie die Übertragung und den Empfang von Signalen über ausgewählte Winkelbereiche unterdrücken.

4. System nach einem der vorhergehenden Ansprüche, **dadurch gekennzeichnet, dass** jedes Teilnehmergerät eine Steuereinheit (44) für die Koordinierung der Teilnehmergeräte innerhalb des zugeordneten Feldbereichs aufweist.

5. System nach einem der vorhergehenden Ansprüche, **dadurch gekennzeichnet, dass** die genannten Objekte, die Begrenzungen für das Feld festlegen, eine oder mehrere undurchlässige Barrieren (16, 24) aufweisen.

6. System nach einem der vorhergehenden Ansprüche, **dadurch gekennzeichnet, dass** jeder Feld-Schnittstellenpunkt eingerichtet ist, um mit zugeordneten Teilnehmergeräten (48) mittels entsprechender Kommunikationskabel zu kommunizieren.

7. System nach einem der vorhergehenden Ansprüche, welches weiters ein oder mehrere Kernnetzwerk-Schnittstellengeräte (56) aufweist, die eingerichtet sind, um eine Schnittstelle zwischen dem Netzwerksystem und einem herkömmlichen Fernnetzwerk (60) zu bieten.

8. System nach Anspruch 7, **dadurch gekennzeichnet, dass** entsprechende Feld-Schnittstellenpunkte angeordnet sind, um mit dem (den) Kernnetzwerk-Schnittstellengerät(en) zu kommunizieren.

9. System nach Anspruch 7 oder 8, **dadurch gekennzeichnet, dass** das Kernnetzwerk-Schnittstellengerät einen für die Kommunikation mit dem zugeordneten Feld-Schnittstellenpunkt eingerichteten ersten Schaltkreis (62), einen für die Kommunikation mit dem herkömmlichen Fernnetzwerk unter Benutzung eines Standard Übertragungsprotokolls eingerichteten zweiten Schaltkreis (64), und ein Kernnetzwerk-Gateway (72) zum Bilden einer Schnittstelle zwischen erstem und zweitem Schaltkreis aufweist.

10. System nach einem der vorhergehenden Ansprüche, weiters **gekennzeichnet durch** eine Steuerungssoftware (78), welche eingerichtet ist, um den Betrieb der Elemente des Netzwerksystems auf der Basis eines Multiplexverfahrens zu koordinieren.

11. System nach Anspruch 10, **dadurch gekennzeichnet, dass** das Multiplexverfahren ein Zeitmultiplexverfahren ist.

12. Verfahren zur Bereitstellung breitbandiger Massenkommunikation, welches aufweist:
Bilden einer Vielzahl von Zonen (10), welche je eine Vielzahl von Teilnehmern beinhalten, die kabellose Übertragungsmittel (12) haben, um Signale innerhalb der Zone zu übersenden und zu empfangen, und
Verbinden der Vielzahl der Zonen entsprechend miteinander mittels Schnittstellenmitteln (46), wobei die Schnittstellenmittel eine andere Form der Kommunikation verwenden, als innerhalb der Zone vorgesehen ist, und
wobei jede Zone als Feld (10) geformt ist, durch:
Bereitstellen eines entsprechenden Teilnehmergerätes (12) an jeden aus der Vielzahl an Teilnehmern, um Signale zu den anderen Teilnehmern in dem Feld zu Übersenden und von diesen zu Empfangen, wobei jedes Teilnehmergerät ein Innen-Schnittstellengerät (20) für den Benutzerzugang zum System und ein außen montiertes Kommunikationsgerät (18) zum Übertragen und zum Empfangen von Signalen aufweist,
Lokalisieren der Vielzahl der Teilnehmergeräte innerhalb des Feldes, die eine Kommunikation in direkter Sichtverbindung zueinander aufweisen,
Auftragen der Signale auf ein Trägersignal, welches in Frequenzen im Bereich von Infrarot bis Ultraviolett arbeitet,
Übertragen der Trägersignale im Wesentlich in alle Richtungen,
Verwenden von Objekten (16, 24, 26) innerhalb und/oder rund um das entsprechende Feld, um für das Feld Begrenzungen festzulegen und um das Ausbreitungsmuster des Trägersignals zu begrenzen, und
untereinander Verbinden entsprechender Felder mit Schnittstellenmitteln, welche Feld-Schnittstellenpunkte aufweisen, die mit entsprechenden Teilnehmern von zumindest zwei angrenzenden Felder verbunden sind.

13. Verfahren nach Anspruch 12, **gekennzeichnet durch** das Unterdrücken von Übertragung und Empfang der Trägersignale von zumindest einigen der Teilnehmergeräte innerhalb eines bestimmten Feldes.

14. Verfahren nach Anspruch 13, **gekennzeichnet durch** das Unterdrücken von Übertragung und Empfang der Trägersignale über ausgewählte Winkelbereiche.

15. Verfahren nach einem der Ansprüche 12 bis 14, weiters **gekennzeichnet durch** das Bereitstellen eines oder mehrerer Kernnetzwerk-Schnittstellengeräte (56) welche eine Schnittstelle zwischen dem Netzwerksystem und einem konventionellen Fernnetzwerk bilden.

16. Verfahren nach Anspruch 15, **dadurch gekennzeichnet, dass** entsprechende Feld - Schnittstellenpunkte eingerichtet sind, um mit dem (den) Kernnetzwerk-Schnittstellengerät(en) zu kommunizieren.

17. Verfahren nach einem der Ansprüche 12 bis 16, weiters **gekennzeichnet durch** das Koordinieren des Betriebes der Elemente des Netzwerksystems auf der Basis eines Multiplexverfahrens.

18. Verfahren nach Anspruch 17, **dadurch gekennzeichnet, dass** das Multiplexverfahren ein Zeitmultiplexverfahren ist.

## Revendications

1. Système réseau de communication de masse à large bande comprenant :
une pluralité de zones (10), incluant chacune une pluralité d'abonnés munis de moyens de communication sans fil (12) pour transmettre et recevoir des signaux à l'intérieur de la zone, et
des moyens d'interface (46) pour connecter la pluralité de zones respectivement les unes aux autres, les moyens d'interface utilisant une forme de moyens de communication autre que celle prévue à l'intérieur des zones,
dans lequel
chaque zone est formée comme une parcelle (10) comprenant :
une pluralité d'unités d'abonné (12), associées chacune à un abonné respectif parmi les abonnés pour transmettre des signaux aux autres abonnés à l'intérieur de la parcelle et recevoir des signaux de ceux-ci, la pluralité d'unités d'abonné à l'intérieur de la parcelle étant en communication en visibilité directe les unes avec les autres ;
chaque unité d'abonné comprenant une unité d'interface intérieure (20) permettant à un utilisateur d'accéder au système et une unité de communication montée à l'extérieur (18) pour la transmission et la réception de signaux ;
chaque unité d'abonné étant à même d'imprimer les signaux sur un signal de la porteuse fonctionnant à des fréquences comprises dans l'intervalle allant de l'infrarouge à l'ultraviolet et de transmettre dans sensiblement toutes les directions le signal de la porteuse, et
des objets (16, 24, 26) à l'intérieur et/ou autour de la parcelle respective à même de définir des limites (14) pour la parcelle et de limiter le schéma de propagation du signal de la porteuse,
et dans lequel :
les moyens d'interface comprennent des points d'interface entre parcelles interconnectant des parcelles respectives, les points d'interface entre parcelles étant connectés à des unités d'abonné respectives dans au moins deux parcelles adjacentes.

2. Système suivant la revendication 1, **caractérisé en ce qu'**une partie au moins des unités d'abonné à l'intérieur d'une parcelle respective sont munies de moyens (44) pour supprimer la transmission et la réception des signaux de la porteuse.

3. Système suivant la revendication 2, **caractérisé en ce que** les moyens de suppression sont à même de supprimer la transmission et la réception de signaux sur des intervalles angulaires déterminés.

4. Système suivant l'une quelconque des revendications précédentes, **caractérisé en ce que** chaque unité d'abonné comprend un contrôleur (44) pour coordonner les unités d'abonné à l'intérieur de la parcelle associée.

5. Système suivant l'une quelconque des revendications précédentes, **caractérisé en ce que** lesdits objets définissant des limites pour la parcelle comprennent un ou plusieurs obstacles opaques (16, 24).

6. Système suivant l'une quelconque des revendications précédentes, **caractérisé en ce que** chaque point d'interface entre parcelles est à même de communiquer avec les unités d'abonné (48) associées au moyen de câbles de télécommunications respectifs.

7. Système suivant l'une quelconque des revendications précédentes, comprenant en outre une ou plusieurs unités d'interface de réseau central (56) à même de fournir une interface entre le système réseau et un réseau interurbain (60) conventionnel.

8. Système suivant la revendication 7, **caractérisé en ce que** des points d'interface entre parcelles respectifs sont à même de communiquer avec la ou les unités d'interface de réseau central.

9. Système suivant la revendication 7 ou 8, **caractérisé en ce que** l'unité d'interface de réseau central comprend un premier circuit (62) à même de communiquer avec le point d'interface entre parcelles associé, un deuxième circuit (64) à même de communiquer en utilisant un protocole de transport standard avec le réseau interurbain conventionnel, et une passerelle de réseau central (72) pour fournir une interface entre les premier et deuxième circuits.

10. Système suivant l'une quelconque des revendications précédentes, **caractérisé en outre par** des logiciels de gestion (78) à même de coordonner le fonctionnement d'éléments du système réseau selon un mode de multiplexage.

11. Système suivant la revendication 10, **caractérisé en ce que** le mode de multiplexage est un mode de multiplexage par répartition dans le temps.

12. Procédé permettant des communications de masse à large bande, comprenant :
la formation d'une pluralité de zones (10), incluant chacune une pluralité d'abonnés munis de moyens de communication sans fil (12) pour transmettre et recevoir des signaux à l'intérieur de la zone, et
l'interconnexion de la pluralité de zones respectivement les unes aux autres par des moyens d'interface (46), les moyens d'interface utilisant une forme de moyens de communication autre que celle utilisée à l'intérieur des zones, et
dans lequel chaque zone est formée comme une parcelle (10) en :
munissant chaque abonné parmi la pluralité d'abonnés d'une unité d'abonné (12) respective pour transmettre des signaux à d'autres abonnés à l'intérieur de la parcelle et recevoir des signaux de ceux-ci, chaque unité d'abonné comprenant une unité d'interface intérieure (20) permettant à un utilisateur d'accéder au système et une unité de communication montée à l'extérieur (18) pour la transmission et la réception de signaux ;
plaçant la pluralité d'unités d'abonné à l'intérieur de la parcelle en communication en visibilité directe les unes avec les autres ;
imprimant les signaux sur un signal de la porteuse fonctionnant à des fréquences comprises dans l'intervalle allant de l'infrarouge à l'ultraviolet ;
transmettant les signaux de la porteuse sensiblement dans toutes les directions ;
utilisant des objets (16, 24, 26) à l'intérieur et/ou autour de la parcelle respective à même de définir des limites pour la parcelle et de limiter le schéma de propagation du signal de la porteuse, et
interconnectant des parcelles respectives aux moyens d'interface, qui comprennent des points d'interface entre parcelles connectés à des abonnés respectifs dans au moins deux parcelles adjacentes.

13. Procédé suivant la revendication 12, **caractérisé par** la suppression de la transmission et de la réception des signaux de la porteuse par une partie au moins des unités d'abonné à l'intérieur d'une parcelle respective.

14. Procédé suivant la revendication 13, **caractérisé par** la suppression de la transmission et de la réception desdits signaux de la porteuse sur des intervalles angulaires déterminés.

15. Procédé suivant l'une quelconque des revendications 12 à 14, **caractérisé en outre par** la mise à disposition d'une ou de plusieurs unités d'interface de réseau central (56) formant une interface entre le système réseau et un réseau interurbain conventionnel.

16. Procédé suivant la revendication 15, **caractérisé en ce que** des points d'interface entre parcelles respectifs sont à même de communiquer avec la ou les unités d'interface de réseau central.

17. Procédé suivant l'une quelconque des revendications 12 à 16, **caractérisé en outre par** la coordination du fonctionnement d'éléments du système réseau selon un mode de multiplexage.

18. Procédé suivant la revendication 17, **caractérisé en ce que** le mode de multiplexage est un mode de multiplexage par répartition dans le temps.
